# EUROPEAN PATENT SPECIFICATION

(11) **EP 3 548 566 B1**
(45) Date of publication and mention of the grant of the patent: **30.09.2020**
(21) Application number: 17805177.7
(22) Date of filing: 27.11.2017
(51) Int. Cl.: C09D 5/02, C09D 167/08, C08L 67/08

(54) **PROCESS FOR THE PREPARATION OF AN AQUEOUS BINDER COMPOSITION, AQUEOUS BINDER COMPOSITION, AND AQUEOUS COATING COMPOSITION COMPRISING SUCH BINDER COMPOSITION**
VERFAHREN ZUR HERSTELLUNG EINER WÄSSRIGEN BINDEMITTELZUSAMMENSETZUNG, WÄSSRIGE BINDEMITTELZUSAMMENSETZUNG UND WÄSSRIGE BESCHICHTUNGSZUSAMMENSETZUNG MIT SOLCH EINER BINDEMITTELZUSAMMENSETZUNG
PROCÉDÉ POUR LA PRÉPARATION D'UNE COMPOSITION DE LIANT AQUEUX, COMPOSITION DE LIANT AQUEUX, ET COMPOSITION DE REVÊTEMENT AQUEUX COMPRENANT CETTE COMPOSITION DE LIANT

(30) Priority: 29.11.2016 EP 16201144
(43) Date of publication of application: 09.10.2019
(73) Proprietor: Akzo Nobel Coatings International B.V., 6824 BM Arnhem (NL)
(72) Inventor: OLSEN, Jørgen Henrik, DK-2770 Kastrup (DK)
(74) Representative: Akzo Nobel IP Department
(86) International application number: PCT/EP2017/080458
(87) International publication number: WO 2018/099840

(56) References cited:
- WO-A1-97/26303
- WO-A1-2011/053904
- US-A1- 2014 024 742

## Description

### Field of the Invention

The present invention relates to a process for the preparation of an aqueous binder composition, an aqueous binder composition obtainable by such process, and an aqueous coating composition comprising such aqueous binder composition.

### Background of the Invention

Aqueous coating compositions comprising dispersed binder polymers, such as dispersed acrylate binder polymers, dispersed oxidatively drying binder polymers such as for example alkyds, or combinations thereof, are well-known in the art. Such aqueous compositions with dispersed binder polymers avoid the high volatile organic compounds (VOC) contents of traditional solvent-borne coating compositions and therewith bring health and sustainability benefits.

Aqueous coating compositions comprising dispersed binder polymers typically have a binder polymer content below 40 wt%, since binder dispersions can usually not be prepared with very high binder polymers contents due to viscosity limitations. A relatively low binder polymer content implies that a relatively great amount of energy is required for drying and transporting the coating composition. Moreover, coating compositions with low binder polymer contents result in relatively thin dried coating layers and multiple layers have to be applied to obtain an acceptable coating.

WO 97/26303 discloses aqueous hybrid binder compositions with a high binder polymer content, i.e. above 60 wt% (about 75 wt% in the examples) that are used to prepare aqueous coating compositions with a high solid content. The aqueous hybrid binder compositions of WO 97/26303 are prepared by adding a high solid alkyd binder polymer that is emulsifiable in water to an aqueous dispersion of an acrylic polymer in the presence of a surfactant and/or a protective colloid. A stable aqueous hybrid binder composition comprising emulsified droplets of alkyd and dispersed particles of acrylic polymer is obtained. Such high solid binder composition can advantageously be used in coating compositions that require a high binder polymer content. In particular for transparent or translucent coating compositions as often used for wooden surfaces, such high binder polymer content is important since such coating compositions comprise no or relatively small amounts of inorganic solid compounds, such as inorganic extender particles or inorganic color or white pigments, to increase the solid content.

There is a need in the art for aqueous binder compositions with a high binder polymer content that are stable and have a sufficiently low viscosity and that, if used in aqueous coating compositions, yield aqueous coating compositions with relatively high binder polymer content that result in dried coatings with good appearance properties, such as gloss and image clarity, and with good weather resistance, also after application of a limited number of coating layers.

### Summary of the Invention

It has now been found that an aqueous hybrid binder composition with a relatively high content of binder polymer and acceptable viscosity can be obtained by combining a liquid first alkyd having a relatively low viscosity with an aqueous dispersion of a second alkyd. The thus-obtained binder composition comprises emulsified first alkyd and dispersed second alkyd in a single aqueous phase.

Accordingly the invention relates in a first aspect to a process for the preparation of an aqueous binder composition comprising the following steps:
a) providing a first alkyd as a homogenous liquid, the liquid comprising at least 90 wt% of dissolved or molten first alkyd and the liquid having a viscosity in the range of from 0.5 to 5.0 Pa.s determined according to ISO 3219 at 23 °C and at a shear rate of 100 s⁻¹;
b) providing an aqueous dispersion of a second alkyd; and
c) emulsifying the first alkyd by adding the liquid provided in step a) to the aqueous dispersion provided in step b) or by adding the aqueous dispersion provided in step b) to the liquid provided in step a) and agitating to obtain the aqueous binder composition,
wherein the aqueous binder composition comprises emulsified first alkyd and dispersed second alkyd in a single aqueous phase, and the first alkyd is emulsified in droplets having a volume mean diameter in the range of from 1 to 20 µm.

In a second aspect the invention relates to an aqueous binder composition obtainable by the process as hereinbefore defined. Such binder composition comprises emulsified first alkyd and dispersed second alkyd in a single aqueous phase. Typically, such binder compositions are characterized by a volume mean diameter of the dispersed second alkyd in the range of from 50 to 500 nm, a volume mean diameter of the emulsified first alkyd in the range of from 1 to 20 µm, a weight ratio of the first alkyd to the second alkyd in the range of from 40:60 to 90:10, and a total alkyd content in the range of from 60 to 85 wt%. Accordingly, in a third aspect, the invention relates to an aqueous binder composition comprising emulsified first alkyd and dispersed second alkyd in a single aqueous phase, wherein the dispersed second alkyd has a volume mean diameter in the range of from 50 to 500 nm, the emulsified first alkyd has a volume mean diameter in the range of from 1 to 20 µm, the weight ratio of the first alkyd to the second alkyd is in the range of from 40:60 to 90:10, and the total alkyd content is in the range of from 60 to 85 wt%.

The aqueous binder composition according to the invention can suitably be used in an aqueous coating composition to provide film-forming polymers for such coating composition. Such coating composition comprises the aqueous binder composition according to the invention and further compounds typically used in coating compositions, such as for example color or white pigments, extender pigments, thickeners, and further additives. Optionally the coating composition comprises further binder polymers, e.g. in the form of a further dispersion of binder polymer.

In a fourth aspect the invention therefore relates to an aqueous coating composition comprising an aqueous binder composition as hereinbefore defined.

It has been found that the aqueous coating composition according to the invention results in dried coatings that have good appearance, good gloss and a very good durability.

### Detailed Description of the Invention

In the process according to the invention, a first alkyd is provided as a homogenous liquid. The homogeneous liquid provided is a homogeneous liquid phase of dissolved or molten first alkyd that comprises at least 90 wt% of the first alkyd, based on the total weight of the homogeneous liquid. The first alkyd may be dissolved in a small amount of organic solvent. Preferably, the first alkyd is provided as a substantially pure liquid, i.e. as molten alkyd. The molten first alkyd may comprise traces of solvent as contaminants from its manufacturing process, preferably less than 3 wt%, more preferably less than 2 wt% or even less than 1 wt%.

Preferably, the homogeneous liquid provided in step a) comprises 95 to 100 wt% of the first alkyd, more preferably of from 97 to 99.9 wt%, even more preferably of from 98 to 99.8 wt%.

The liquid provided in step a) has a viscosity in the range of from 0.5 to 5.0 Pa.s. Preferably, the viscosity is in the range of from 0.8 to 4.0 Pa.s, more preferably of from 1.0 to 3.5 Pa.s, even more preferably of from 2.0 to 3.2 Pa.s. Any reference herein to viscosity of binder polymers in the liquid state or as emulsion or dispersion is to the viscosity as determined according to ISO 3219 at 23 °C and at a shear rate of 100 s⁻¹.

It is known that the viscosity of an alkyd is influenced by its molecular weight, its oil length and its degree of branching. Viscosity is generally increased by a higher molecular weight, a lower oil length or a lower degree of branching at the same molecular weight. Thus, the skilled person can control viscosity of the first alkyd by controlling these parameters.

The first alkyd preferably is an alkyd with a weight-average molecular weight of at most 12,000 g/mole. More preferably, the weight-average molecular weight is in the range of from 5,000 g/mole to 10,000 g/mole, even more preferably of from 5,500 g/mole to 9,000 g/mole. The weight-average molecular weight Mw can suitable be determined using Gel Permeation Chromatography using polystyrene calibration according to ISO 13885. The first alkyd preferably has a polydispersity index, i.e. the ratio of weight-average to number-average molecular weight (molar mass), of at most 4.0, more preferably of at most 3.5.

The first alkyd preferably has an oil length of at least 70%, more preferably in the range of from 74 to 88 %, even more preferably of from 76 to 85%.

The first alkyd preferably is a branched alkyd, i.e. an alkyd with a polyester backbone that is branched. The degree of branching is defined as the probability that a randomly selected functional group of a branch unit is connected to another branch unit either directly or via a chain of bifunctional units (P.J. Flory, Principles of Polymer Chemistry, Cornell University Press, Ithaca, N.Y., 1953). The degree of branching can be increased by increasing the average functionality of the monomers used for the polyester backbone.

The first alkyd is an alkyd that is emulsifyable in water. The first alkyd preferably has an acid value below 25 mg KOH/g, more preferably below 15 mg KOH/g, even more preferably between 5 and 10 mg KOH/g. The acid value can suitably be determined in accordance with ISO 2114.

The first alkyd is preferably an unmodified alkyd, i.e. an alkyd without functional side-chains other than its fatty acid side chains.

Suitable first alkyds are known in the art and commercially available. An example of a suitable first alkyd is the alkyd prepared in example 5 of WO 97/26303. Examples of commercially available alkyds that may be used as the first alkyd include Setal 293, Setal 304, Setal 303 SM-90 (ex. Nuplex), Vialkyd ® VAF 6091 (ex. Allnex), and Urakyd AD 97 (ex. Synres B.V.).

A preferred first alkyd is prepared by reacting tall oil fatty acids with pentaerythritol and a small amount of an anhydride such as trimellitic anhydride or hexahydrophthalic anhydride.

In step b) of the process according to the invention, an aqueous dispersion of a second alkyd is provided.

Subsequently, the liquid first alkyd is emulsified (step c)) either by adding the liquid first alkyd to the aqueous dispersion of the second alkyd or by adding the aqueous dispersion of the second alkyd to the liquid first alkyd. The emulsification is done under agitation in a suitable emulsification apparatus. Suitable apparatuses for emulsification are well-known in the art. An example of a suitable apparatus is a dissolver-type agitator. Emulsification step c) is preferably carried out in the presence of one or more surfactants. Such surfactants may be provided with the dispersion of second alkyd or may be added separately during or just before emulsification step c). Suitable surfactants are well-known in the art and include surfactants commonly used in coating compositions such as anionic and non-ionic surfactants and combinations thereof. Preferably, emulsification step c) is carried out at a temperature in the range of from 15 to 100 °C, more preferably of from 20 to 80 °C. Additional water may be added before or during emulsification step c).

Agitation is carried out until the first alkyd is emulsified into droplets with a volume mean diameter in the range of from 1 to 20 µm, preferably of from 1 to 10 µm. Preferably, agitation is carried out until the volume mean diameter of the emulsified first alkyd is such that the ratio between volume mean diameter of the first alkyd and volume mean diameter of the second alkyd is in the range of from 5 to 100, more preferably of from 8 to 50, even more preferably of from 10 to 30. Reference herein to the volume mean diameter of droplets or particles is to the volume mean diameter - also known as D[4,3] - as determined by means of laser diffraction, such as with a Mastersizer 3000™, ex Malvern.

Thus, an aqueous binder composition is obtained that comprises emulsified first alkyd and dispersed second alkyd in a single aqueous phase. The aqueous binder composition thus obtained has a relatively high alkyd content, typically above 50 wt%, preferably in the range of from 60 to 85 wt%, more preferably of from 65 to 80 wt%, based on the total weight of the binder composition. Without wishing to be bound to any theory, it is believed that the combination of relatively large droplets of emulsified first alkyd and smaller particles of dispersed second alkyd in a single aqueous phase results in a stable aqueous binder composition with high alkyd content.

Preferably, the amounts of liquid first alkyd and dispersion of second alkyd used in emulsification step c) are such that the aqueous binder composition obtained in step c) has a weight ratio of first alkyd to second alkyd in the range of from 40:60 to 90:10, more preferably of from 50:50 to 80:20.

The binder composition obtained is a stable binder composition, typically the binder composition remains stable, i.e. retains its homogeneity, for at least 3 months, preferably up to 6 months.

The second alkyd may be any alkyd that gives desired properties to the coating composition wherein it will be used or to the dried coating made with such coating composition, in particular hardness and scratch resistance of the dried coating. The skilled person will know which alkyd to choose for what coating properties. For instance, if relatively hard coatings are desired, the second alkyd preferably has an oil length below 70%. The second alkyd more preferably is an alkyd with an oil length in the range of from 30% to 55%.

The second alky may be an unmodified or modified alkyd. Preferably, the second alkyd is a modified alkyd so as to optimally set the desired properties of the resulting binder and coating composition.

The second alkyd may for example be an alkyd modified with silanes or silanols, modified with acetal-functional monomers, or modified with acetoacetates. Such modified alkyds exhibit good substrate adherence.

The second alkyd may be an alkyd modified with vinyl and (meth)acryl monomers, such as styrene, vinyl chloride, vinyl acetate, methyl acrylate, methyl methacrylate, ethyl acrylate, ethyl methacrylate, butyl acrylate, hydroxyethyl methacrylate, acrylic acid, methacrylic acid, glycidyl acrylate and glycidyl methacrylate. Vinyl or acrylate-modified alkyds are known to result in good gloss and exterior durability of the dried coating. Such alkyds may also improve the hardness of the dried coating.

Alternatively, the second alkyd may be an epoxy-modified alkyd, in particular if adhesion of the dried coating to metal is desired.

The second alkyd may be a phenol-modified alkyd. Such alkyds typically result in quick drying coatings and good hardness of the dried coating. Phenol-modified alkyds also results in good substrate adhesion and impart some solvent resistance to the dried coating.

Preferably, the second alkyd is a polyurethane-modified alkyd, which typically renders hard and durable coatings. Polyurethane-modified alkyds are well-known in the art and commercially available, for example as Neopac™ PU480 or Necowel™ 5088.

The dispersion of the second alkyd usually has a viscosity in the range of from 0.1 to 1 Pa.s, preferably of from 0.2 to 0.5 Pa.s, as determined according to ISO 3219 at 23 °C and at a shear rate of 100.s⁻¹.

The dispersion may have any suitable content of second alkyd, preferably in the range of from 35 to 55 wt%, more preferably of from 40 to 50 wt%.

Suitable dispersions of second alkyd typically have particles of the second alkyd with a volume mean diameter in the range of from 50 to 500 nm, preferably the volume mean diameter is in the range of from 100 to 300 nm.

Dispersions of suitable alkyds are well-known in the art and commercially available. Examples of suitable commercially available alkyd dispersions are Neopac™ PU480 (ex. DSM), Necowel™ 5088, Necowel™ 5100 (ex. ASK Chemicals), Synaqua® 4804 (ex. Arkema), and Worleesol® E 150W (ex. Worlée).

The invention further relates to an aqueous binder composition obtainable by the process according to the invention. Such aqueous binder composition has emulsified first alkyd and dispersed second alkyd in a single aqueous phase. Typically, such binder compositions are characterized by a volume mean diameter of the dispersed second alkyd in the range of from 50 to 500 nm, preferably of from 100 to 300 nm, a volume mean diameter of the emulsified first alkyd in the range of from 1 to 20 µm, a weight ratio of the first alkyd to the second alkyd in the range of from 40:60 to 90:10, and a total alkyd content in the range of from 60 to 85 wt%.

Therefore, the invention further relates to an aqueous binder composition comprising emulsified first alkyd and dispersed second alkyd in a single aqueous phase, wherein the dispersed second alkyd has a volume mean diameter in the range of from 50 to 500 nm, the emulsified first alkyd has a volume mean diameter in the range of from 1 to 20 µm, the weight ratio of the first alkyd to the second alkyd is in the range of from 40:60 to 90:10, and the total alkyd content is in the range of from 60 to 85 wt%.

Any preferred features hereinbefore specified in relation to the process according to the invention also apply to the binder composition according to the invention.

The binder composition according to the invention can advantageously be used in an aqueous coating composition. Therefore, in a further aspect, the invention relates to an aqueous coating composition comprising the binder composition according to the invention. Such coating composition will typically comprise one or more further ingredients that are commonly used in coating compositions such as paints, stains, or varnishes. Such further ingredients may for example be color or white pigments, inorganic extenders, thickeners, and additives typically applied in paints, stains or varnishes, such as biocides, leveling agents, matting agents, UV stabilizers, dispersants, surfactants, antifoaming agents, wetting agents, anti-skinning agents, siccatives, and waxes. Optionally the coating composition comprises one or more further binder polymers, e.g. in the form of a further dispersed binder polymer such as an additional dispersed alkyd. The additional dispersed alkyd may be the same as or different from the second alkyd.

Reference herein to an aqueous coating composition is to a paint, stain or varnish, preferably to a paint, stain or varnish or a stain that may be used as a top coating, with or without a primer coating.

Preferably, the aqueous coating composition comprises at least 40 wt% binder polymer, more preferably at least 42 wt%, based on the total weight of the coating composition. Preferably, the aqueous coating composition comprises at most 60 wt% of binder polymer.

The binder composition according to the invention is advantageously used in transparent or translucent coating compositions, i.e. coating compositions with low levels of inorganic color or white pigments and inorganic extenders (fillers) such as for example calcium carbonate, kaolin, silicates, talc. In such coating compositions a relatively high content of binder polymer is needed to achieve an acceptable coating with a limited number of coating layers. Therefore, the aqueous coating composition preferably is a coating composition comprising in the range of from 0 to 10 wt% inorganic solid particles based on the total weight of the coating composition. Inorganic solid particles include inorganic color and white pigment particles and inorganic extender (filler) particles

### Examples

The invention is illustrated by means of the following non-limiting examples.

### Example 1 - preparation of first alkyd

71 parts by weight of tall oil fatty acid, 15.92 parts by weight of pentaerythritol, 11 parts by weight of hexahydrophtalic anhydride acid and 2 parts by weight of trimellitic anhydride were supplied to a reaction flask. The mixture was then heated in nitrogen gas atmosphere to 230 °C. The reaction mixture was kept at this temperature until an acid number below 10 had been reached. Subsequently, the mixture was cooled to 150 °C, and 27 parts by weight of tall oil fatty acid were added. The temperature was again raised to 230 °C. The reaction mixture was kept at this temperature until an acid number below 12 had been reached.

Xylene was added for ease of water removal. After water removal, the xylene was removed by vacuum distillation.

The liquid had an alkyd content of 99.5 wt%, a weight-average molecular weight of 6,000 g/mole, a polydispersity index of 2.5, and a viscosity of 2.5 Pa.s at 23 °C at a shear rate of 100 s⁻¹.

### Example 2 - Binder composition according to the invention

With the alkyd prepared in Example 1 and a commercially available dispersion or polyurethane-alkyd (Neopac™ PU480; ex DSM - 42 wt% solid binder polymer), a binder composition was prepared with a composition as shown in Table 1.

**Table 1 - Ingredients of aqueous binder compositions**

| | % |
|---|---|
| Liquid alkyd of Example 1 | 49.6 |
| Caustic soda 25% | 0.3 |
| Dehydran 1620 (defoamer) | 0.3 |
| Neopac™ PU480* | 45.1 |
| Disponil AFX 3070 (non-ionic surfactant) | 0.3 |
| Aerosol TR70% (anionic surfactant) | 1.5 |
| Water | 3.0 |
| Mirecide NM/05 (biocide) | 0.1 |

| | |
|---|---|
| * volume mean diameter (D[4,3]) of alkyd particles is 114 nm | |

In a high speed dissolver emulsifier mixer, the liquid alkyd of example 1, caustic soda and defoamer were mixed at a low mixing speed. The mixing was stopped and Neopac PU 480 was added below the surface of the mixture. The surfactants and water were added and the components were mixed at a low mixing speed for a few minutes until phase inversion occurred. Upon phase inversion, the mixing speed was increased and mixing was continued at high shear until the liquid alkyd of example 1 had a volume mean diameter in the range of 2.4 µm. Biocide was added after the desired particle size was achieved.

The resulting binder composition comprised 68.3 wt% binder polymer based on the total weight of the composition: 49.4 wt% first alkyd and 18.9 wt% of solid polyurethane-alkyd (second alkyd).

### Example 3 - Aqueous coating composition according to the invention (coating I).

A coating composition according to the invention was prepared as follows. At room temperature, a matting paste was formed by mixing water, caustic soda, ACEMATT TS 100, and additives (UV absorbers, dispersant and surfactant). In a let-down tank, the hybrid binder composition of example 2 was mixed with defoamer and siccative, and the matting paste was added under stirring. Then, Neopac™ PU480, biocide, surfactants and color pigments were added to form a transparent coating composition (coating composition I).

**Table 2 - composition of coating composition I**

| Ingredient | wt% |
|---|---|
| Matting paste | |
| Water | 13.89 |
| Caustic soda (25%) | 0.17 |
| ACEMATT TS 100 | 0.96 |
| Additives (UV absorbers, dispersants, surfactants) | 0.95 |
| Hybrid binder composition of example 2 | 50.43 |
| Defoamer | 0.19 |
| Siccative | 0.55 |
| Neopac™ PU480 | 23.91 |
| Biocide | 1.29 |
| Surfactants | 1.25 |
| Color pigments | 6.39 |

The resulting coating composition I comprises, based on total dry binder polymer content, 56 wt% of the first alkyd and 44 wt% of the second alkyd (PU-alkyd from Neopac™ PU 480) and has a total solid content of 51 wt% based on the total weight of the composition.

### Example 4 - alkyd/acrylate hybrid binder composition (comparative)

An aqueous hybrid binder composition was prepared as described in Example 2, but now with a dispersion of an acrylate binder polymer based on (meth)acrylic acid esters (Mowilith FA 336 S; ex Celanese - 56 wt% solid binder polymer), instead of a dispersion or polyurethane-alkyd.

**Table 3 - Ingredients of alkyd/acrylate aqueous binder composition**

| | % |
|---|---|
| Liquid alkyd of Example 1 | 49.6 |
| Caustic soda 25% | 0.3 |
| Dehydran 1620 (defoamer) | 0.3 |
| Mowilith FA 336 S* | 45.1 |
| Disponil AFX 3070 (non-ionic surfactant) | 0.3 |
| Aerosol TR70% (anionic surfactant) | 1.5 |
| Water | 3.0 |
| Mirecide NM/05 (biocide) | 0.1 |

| | |
|---|---|
| * volume mean diameter (D[4,3]) of acrylate particles is 313 nm | |

The resulting binder composition comprised 74.6 wt% binder polymer based on the total weight of the composition: 49.3 wt% alkyd and 25.3 wt% of solid acrylate.

### Example 5 - Aqueous coating composition II (comparative).

An aqueous coating composition was prepared as described in Example 3, but now with the hybrid binder composition as prepared in Example 4.

**Table 4 - composition of coating composition II**

| Ingredient | wt% |
|---|---|
| Matting paste | |
| Water | 22.77 |
| Caustic soda (25%) | 0.17 |
| ACEMATT TS 100 | 0.94 |
| Thickener | 0.94 |
| Additives (UV absorbers, dispersants, surfactants) | 0.94 |
| Hybrid binder composition of example 4 | 55.42 |
| Defoamer | 0.19 |
| thickener | 0.46 |
| Siccative | 0.55 |
| dispersants | 2.61 |
| water | 6.06 |
| Biocide | 1.26 |
| Surfactants | 1.45 |
| Color pigments | 6.26 |

The resulting coating composition II comprises, based on total dry binder polymer content, 66 wt% of the first alkyd and 34 wt% of the acrylate and has a total solid content of 51 wt% based on the total weight of the composition.

### Test results

Coating composition I (according to the invention) and coating composition II (comparative) according to examples 3 and 4, respectively were applied to a non-primed pine substrate by brush. Two layers of coating composition were applied. The coating composition was allowed to dry at room temperature for 24 hours between each coat.

Pine (*Pinus sylvestris*) panels with a length of 1 meter were used as substrate. In order to stress the system, the coating compositions have been applied on the bark side of the substrate, since the bark side of a wooden substrate wood is more prone to crack than the heartwood side.

The panels were facing south and placed in a 45° angle. The test station was located in Adelboden, at an altitude of approximately 1400 m above sea level. At this location there is a high amount of UV radiation and a lot of freeze - thaw cycles. These factors accelerate degradation of the tested systems.

Inspection was done by the same person according to ISO Standard 4628 - Paints and varnishes - Evaluation of degradation of coatings - Designation of quantity and size of defects, and of intensity of uniform changes in appearance.

The following properties of the coated panels were evaluated according to ISO 4628:

### General appearance ISO 4628-1

General appearance was rated on a scale from 0 (no perceptible change) to 5 (very marked change).

### Erosion ISO 4628-1

Erosion was rated on a scale from 0 (no perceptible erosion) to 5 (0 is best, 5 is worst).

### Cracking ISO 4628-4

Depth, size and number of cracks were each rated on a scale of 0 (no detectable cracks) to 5 (0 is best, 5 is worst). The sum of the three ratings is given in Table 2.

### Gloss at 60 ° ISO 2813

The results are shown in Table 5.

**Table 5 - Results after 3 years of exposure in Adelboden**

| Coating | General appearance | erosion | cracking (sum of depth and size | Gloss |
|---|---|---|---|---|
| I | 2 | 1 | 7 | 2.2 |
| II* | 4 | 3 | 9 | 0.6 |

| | | | | |
|---|---|---|---|---|
| * This coating showed a lot of binder polymer bleeding. | | | | |

These results show that the binder composition according to the invention provides coating compositions that result in dried coatings with improved appearance properties (general appearance and gloss), even after 3 years exposure at harsh weather conditions.

## Claims

1. A process for the preparation of an aqueous binder composition comprising the following steps:
a) providing a first alkyd as a homogenous liquid, the liquid comprising at least 90 wt% of dissolved or molten first alkyd and the liquid having a viscosity in the range of from 0.5 to 5.0 Pa.s determined according to ISO 3219 at 23 °C and at a shear rate of 100 s⁻¹;
b) providing an aqueous dispersion of a second alkyd; and
c) emulsifying the first alkyd by adding the liquid provided in step a) to the aqueous dispersion provided in step b) or by adding the aqueous dispersion provided in step b) to the liquid provided in step a) and agitating to obtain the aqueous binder composition,
wherein the aqueous binder composition comprises emulsified first alkyd and dispersed second alkyd in a single aqueous phase, and the first alkyd is emulsified in droplets having a volume mean diameter in the range of from 1 to 20 µm.

2. A process according to claim 1, wherein the dispersed second alkyd has a volume mean diameter in the range of from 50 to 500 nm, preferably of from 100 to 300 nm.

3. A process according to claim 1 or 2, wherein the liquid provided in step a) has a viscosity in the range of from 0.8 to 4.0 Pa.s, preferably of from 2.0 to 3.2 Pa.s.

4. A process according to claims any one of the preceding claims, wherein the liquid provided in step a) comprises in the range of from 95 to 100 wt% of the first alkyd, preferably of from 97 to 99.9 wt%, even more preferably of from 98 to 99.8 wt%.

5. A process according to any one of the preceding claims, wherein the dispersion provided in step b) comprises in the range of from 35 to 55 wt% of the second alkyd, preferably of from 40 to 50 wt%, based on the total weight of the dispersion.

6. A process according to any one of the preceding claims, wherein step c) is carried out in the presence of one or more surfactants.

7. A process according to any one of the preceding claims, wherein the weight ratio of the first alkyd and the second alkyd in the binder composition obtained is in the range of from 40:60 to 90:10, preferably of from 50:50 to 80:20.

8. A process according to any one of the preceding claims, wherein the binder composition obtained has an alkyd content in the range of from 60 to 85 wt%, preferably of from 65 to 80 wt%, based on the total weight of binder composition.

9. An aqueous binder composition obtainable by a process according to any one of claims 1 to 8.

10. An aqueous binder composition comprising emulsified first alkyd and dispersed second alkyd in a single aqueous phase, wherein the dispersed second alkyd has a volume mean diameter in the range of from 50 to 500 nm, the emulsified first alkyd has a volume mean diameter in the range of from 1 to 20 µm, the weight ratio of the first alkyd to the second alkyd is in the range of from 40:60 to 90:10, and the total alkyd content is in the range of from 60 to 85 wt%.

11. An aqueous binder composition according to claim 10, wherein the emulsified first alkyd has a volume mean diameter in the range of from 1 to 10 µm.

12. An aqueous binder composition according to claim 10 or 11, wherein the dispersed second alkyd has a volume mean diameter in the range of from 100 to 300 nm

13. An aqueous coating composition comprising an aqueous binder composition according to any one of claims 9 to 12.

14. An aqueous coating composition according to claim 13 comprising at least 40 wt% binder polymer based on the total weight of the coating composition.

15. An aqueous coating composition according to claim 13 or 14 comprising in the range of from 0 to 10 wt% inorganic solid particles based on the total weight of the coating composition.

## Patentansprüche

1. Verfahren zur Herstellung einer wässrigen Bindemittelzusammensetzung, das die folgenden Schritte umfasst:
a) Bereitstellen eines ersten Alkyds in Form einer homogenen Flüssigkeit, wobei die Flüssigkeit mindestens 90 Gew.-% gelöstes oder geschmolzenes erstes Alkyd umfasst und die Flüssigkeit eine gemäß ISO 3219 bei 23 °C und bei einer Scherrate von 100 s⁻¹ bestimmte Viskosität im Bereich von 0,5 bis 5,0 Pa.s aufweist;
b) Bereitstellen einer wässrigen Dispersion eines zweiten Alkyds und
c) Emulgieren des ersten Alkyds durch Zugeben der in Schritt a) bereitgestellten Flüssigkeit zu der in Schritt b) bereitgestellten wässrigen Dispersion oder durch Zugeben der in Schritt b) bereitgestellten wässrigen Dispersion zu der in Schritt a) bereitgestellten Flüssigkeit und Bewegen zum Erhalt der wässrigen Bindemittelzusammensetzung,
wobei die wässrige Bindemittelzusammensetzung emulgiertes erstes Alkyd und dispergiertes zweites Alkyd in einer einzigen wässrigen Phase umfasst und das erste Alkyd in Tröpfchen mit einem volumenmittleren Durchmesser im Bereich von 1 bis 20 µm emulgiert ist.

2. Verfahren nach Anspruch 1, wobei das dispergierte zweite Alkyd einen volumenmittleren Durchmesser im Bereich von 50 bis 500 nm, vorzugsweise von 100 bis 300 nm, aufweist.

3. Verfahren nach Anspruch 1 oder 2, wobei die in Schritt a) bereitgestellten Flüssigkeit eine Viskosität im Bereich von 0,8 bis 4,0 Pa.s, vorzugsweise von 2,0 bis 3,2 Pa.s, aufweist.

4. Verfahren nach einem der vorhergehenden Ansprüche, wobei die in Schritt a) bereitgestellte Flüssigkeit im Bereich von 95 bis 100 Gew.-% des ersten Alkyds, vorzugsweise von 97 bis 99,9 Gew.-%, noch weiter bevorzugt von 98 bis 99,8 Gew.-%, umfasst.

5. Verfahren nach einem der vorhergehenden Ansprüche, wobei die in Schritt b) bereitgestellte Dispersion im Bereich von 35 bis 55 Gew.-% des zweiten Alkyds, vorzugsweise von 40 bis 50 Gew.-%, bezogen auf das Gesamtgewicht der Dispersion, umfasst.

6. Verfahren nach einem der vorhergehenden Ansprüche, wobei Schritt c) in Gegenwart von einem oder mehreren Tensiden durchgeführt wird.

7. Verfahren nach einem der vorhergehenden Ansprüche, wobei das Gewichtsverhältnis von erstem Alkyd und zweitem Alkyd in der erhaltenen Bindemittelzusammensetzung im Bereich von 40:60 bis 90:10, vorzugsweise von 50:50 bis 80:20, liegt.

8. Verfahren nach einem der vorhergehenden Ansprüche, wobei die erhaltene Bindemittelzusammensetzung einen Alkydgehalt im Bereich von 60 bis 85 Gew.-%, vorzugsweise von 65 bis 80 Gew.-%, bezogen auf das Gesamtgewicht der Bindemittelzusammensetzung, aufweist.

9. Wässrige Bindemittelzusammensetzung, erhältlich durch ein Verfahren nach einem der Ansprüche 1 bis 8.

10. Wässrige Bindemittelzusammensetzung, umfassend emulgiertes erstes Alkyd und dispergiertes zweites Alkyd in einer einzigen wässrigen Phase, wobei das dispergierte zweite Alkyd einen volumenmittleren Durchmesser im Bereich von 50 bis 500 nm aufweist, das emulgierte erste Alkyd einen volumenmittleren Durchmesser im Bereich von 1 bis 20 µm aufweist, das Gewichtsverhältnis von erstem Alkyd zu zweitem Alkyd im Bereich von 40:60 bis 90:10 liegt und der gesamte Alkydgehalt im Bereich von 60 bis 85 Gew.-% liegt.

11. Wässrige Bindemittelzusammensetzung nach Anspruch 10, wobei das emulgierte erste Alkyd einen volumenmittleren Durchmesser im Bereich von 1 bis 10 µm aufweist.

12. Wässrige Bindemittelzusammensetzung nach Anspruch 10 oder 11, wobei das dispergierte zweite Alkyd einen volumenmittleren Durchmesser im Bereich von 100 bis 300 nm aufweist.

13. Wässrige Beschichtungszusammensetzung, umfassend eine wässrige Bindemittelzusammensetzung nach einem der Ansprüche 9 bis 12.

14. Wässrige Beschichtungszusammensetzung nach Anspruch 13, umfassend mindestens 40 Gew.-% Bindemittelpolymer, bezogen auf das Gesamtgewicht der Beschichtungszusammensetzung.

15. Wässrige Beschichtungszusammensetzung nach Anspruch 13 oder 14, umfassend im Bereich von 0 bis 10 Gew.-% anorganische feste Teilchen, bezogen auf das Gesamtgewicht der Beschichtungszusammensetzung.

## Revendications

1. Procédé pour la préparation d'une composition aqueuse de liant comprenant les étapes suivantes :
a) la fourniture d'une première résine alkyde sous forme d'un liquide homogène, le liquide comprenant au moins 90 % en poids de première résine alkyde dissoute ou fondue et le liquide ayant une viscosité, déterminée selon la norme ISO 3219 à 23 °C et à un taux de cisaillement de 100 s⁻¹, dans la plage de 0,5 à 5,0 Pa.s ;
b) la fourniture d'une dispersion aqueuse d'une seconde résine alkyde ; et
c) l'émulsification de la première résine alkyde par ajout du liquide fourni dans l'étape a) à la dispersion aqueuse fournie dans l'étape b) ou par ajout de la dispersion aqueuse fournie dans l'étape b) au liquide fourni dans l'étape a) et agitation pour obtenir la composition aqueuse de liant,
dans lequel la composition aqueuse de liant comprend de la première résine alkyde émulsifiée et de la seconde résine alkyde dispersée dans une seule phase aqueuse et la première résine alkyde est émulsifiée en gouttes ayant un diamètre moyen en volume dans la plage de 1 à 20 µm.

2. Procédé selon la revendication 1, dans lequel la seconde résine alkyde dispersée a un diamètre moyen en volume dans la plage de 50 à 500 nm, de préférence de 100 à 300 nm.

3. Procédé selon la revendication 1 ou 2, dans lequel le liquide fourni dans l'étape a) a une viscosité dans la plage de 0,8 à 4,0 Pa.s, de préférence de 2,0 à 3,2 Pa.s.

4. Procédé selon l'une quelconque des revendications précédentes, dans lequel le liquide fourni dans l'étape a) comprend dans la plage de 95 à 100 % en poids, de préférence de 97 à 99,9 % en poids, encore plus préférablement de 98 à 99,8 % en poids, de la première résine alkyde.

5. Procédé selon l'une quelconque des revendications précédentes, dans lequel la dispersion fournie dans l'étape b) comprend dans la plage de 35 à 55 % en poids, de préférence de 40 à 50 % en poids, de la seconde résine alkyde par rapport au poids total de la dispersion.

6. Procédé selon l'une quelconque des revendications précédentes, dans lequel l'étape c) est mise en œuvre en présence d'un ou plusieurs tensioactifs.

7. Procédé selon l'une quelconque des revendications précédentes, dans lequel le rapport pondéral de la première résine alkyde et de la seconde résine alkyde dans la composition de liant obtenue est dans la plage de 40:60 à 90:10, de préférence de 50:50 à 80:20.

8. Procédé selon l'une quelconque des revendications précédentes, dans lequel la composition de liant obtenue a une teneur en résines alkydes dans la plage de 60 à 85 % en poids, de préférence de 65 à 80 % en poids, par rapport au poids total de composition de liant.

9. Composition aqueuse de liant pouvant être obtenue par un procédé selon l'une quelconque des revendications 1 à 8.

10. Composition aqueuse de liant comprenant de la première résine alkyde émulsifiée et de la seconde résine alkyde dispersée dans une seule phase aqueuse, dans laquelle la seconde résine alkyde dispersée a un diamètre moyen en volume dans la plage de 50 à 500 nm, la première résine alkyde émulsifiée a un diamètre moyen en volume dans la plage de 1 à 20 µm, le rapport pondéral de la première résine alkyde à la seconde résine alkyde est dans la plage de 40:60 à 90:10 et la teneur totale en résines alkydes est dans la plage de 60 à 85 % en poids.

11. Composition aqueuse de liant selon la revendication 10, dans laquelle la première résine alkyde émulsifiée a un diamètre moyen en volume dans la plage de 1 à10 µm.

12. Composition aqueuse de liant selon la revendication 10 ou 11, dans laquelle la seconde résine alkyde dispersée a un diamètre moyen en volume dans la plage de 100 à 300 nm.

13. Composition aqueuse de revêtement comprenant une composition aqueuse de liant selon l'une quelconque des revendications 9 à 12.

14. Composition aqueuse de revêtement selon la revendication 13 comprenant au moins 40 % en poids de polymère liant par rapport au poids total de la composition de revêtement.

15. Composition aqueuse de revêtement selon la revendication 13 ou 14 comprenant dans la plage de 0 à 10 % en poids de particules solides inorganiques par rapport au poids total de la composition de revêtement.
